# EUROPÄISCHE PATENTANMELDUNG

(11) **EP 1 870 951 A1**
(43) Veröffentlichungstag der Anmeldung: **26.12.2007**
(21) Anmeldenummer: 07007581.7
(22) Anmeldetag: 13.04.2007
(51) Int. Cl.: H01M 8/24, H01M 8/02

(54) **Brennstoffzellenstapel**

(30) Priorität: 21.06.2006 DE 102006028440
(71) Anmelder: ElringKlinger AG, 72581 Dettingen (DE)
(72) Erfinder: Fritz, Wolfgang, 72555 Metzingen (DE); Maier, Uwe, 72760 Reutlingen (DE)
(74) Vertreter: Hoeger, Stellrecht & Partner Patentanwälte

(57) **Zusammenfassung**

Um einen Brennstoffzellenstapel, umfassend mehrere längs einer Stapelrichtung aufeinanderfolgende Brennstoffzelleneinheiten, mindestens eine Spannvorrichtung, mittels welcher die Brennstoffzelleneinheiten gegeneinander verspannt werden, und mindestens ein Stapelendelement, das eine stirnseitige Begrenzung des Brennstoffzellenstapels bildet, zu schaffen, welcher besonders leicht und rasch montierbar ist, wird vorgeschlagen, dass die Spannvorrichtung mindestens ein Zugelement umfasst, das eine Zugkraft für die Verspannung der Brennstoffzelleneinheiten überträgt und an mindestens einem Stapelendelement eingehängt ist.

## Beschreibung

Die vorliegende Erfindung betrifft einen Brennstoffzellenstapel, der mehrere längs einer Stapelrichtung aufeinanderfolgende Brennstoffzelleneinheiten, mindestens eine Spannvorrichtung, mittels welcher die Brennstoffzelleneinheiten gegeneinander verspannt werden, und mindestens ein Stapelendelement, das eine stirnseitige Begrenzung des Brennstoffzellenstapels bildet, umfasst.

Ein solcher Brennstoffzellenstapel ist beispielsweise aus der DE 100 44 703 A1 bekannt.

Bei bekannten Brennstoffzellenstapeln dieser Art umfasst die Spannvorrichtung mehrere Zuganker und Muttern, mittels welcher massive Endplatten des Brennstoffzellenstapels gegeneinander gezogen werden, um die im Betrieb des Brennstoffzellenstapels erforderlichen Dicht- und Kontaktkräfte auf die Brennstoffzelleneinheiten aufzubringen.

Aus der DE 10 2004 037 678 A1 ist es bekannt, die Zugelemente, mittels welcher die Endplatten eines BrennstofFzellenstapels gegeneinander verspannt werden, als Stab, Seil, Draht, Kette, Band oder Fasermaterial auszuführen.

Der vorliegenden Erfindung liegt die Aufgabe zugrunde, einen Brennstoffzellenstapel der eingangs genannten Art zu schaffen, welcher besonders leicht und rasch montierbar ist.

Diese Aufgabe wird bei einem Brennstoffzellenstapel mit den Merkmalen des Oberbegriff von Anspruch 1 erfindungsgemäß dadurch gelöst, dass die Spannvorrichtung mindestens ein Zugelement umfasst, das eine Zugkraft für die Verspannung der Brennstoffzelleneinheiten überträgt und an mindestens einem Stapelendelement eingehängt ist.

Dadurch, dass bei dem erfindungsgemäßen BrennstofFzellenstapel das Zugelement nicht mit dem Stapelendelement verschraubt und auch nicht durch andere Befestigungsmittel an dem Stapelendelement festgelegt werden muss, sondern ohne zusätzliches Werkzeug an dem Stapelendelement einhängbar ist, gestaltet sich die Montage des erfindungsgemäßen Brennstoffzellenstapels und auch dessen Demontage (im Falle eines Wartungs- oder Reparaturvorgangs) besonders einfach und rasch.

Besonders günstig ist es, dass das eingehängte Zugelement bei Bedarf auch leicht wieder von dem Stapelendelement gelöst werden kann.

Eine Einhängung des Zugelements am Stapelendelement ist besonders einfach durchführbar, wenn das Stapelendelement mindestens eine Einhängenase zum Einhängen des Zugelements aufweist.

Eine solche Einhängenase kann insbesondere einen eine Hinterschneidung bildenden Vorsprung aufweisen, durch den das Zugelement gegen ein Ablösen von dem Stapelendelement gesichert ist.

Ferner ist es günstig, wenn das Zugelement mindestens eine Einhängeöffnung zum Einhängen an dem Stapelendelement aufweist.

Bei einer besonderen Ausgestaltung der Erfindung ist vorgesehen, dass der Brennstoffzellenstapel zwei einander gegenüberliegende Stapelendelemente umfasst, welche jeweils eine stirnseitige Begrenzung des Brennstoffzellenstapels bilden, und dass mindestens ein Zugelement an beiden Stapelendelementen eingehängt ist.

Ferner ist es günstig, wenn mindestens ein Zugelement streifen- oder bandförmig ausgebildet ist. Ein streifen- oder bandförmiges Zugelement weist nur ein geringes Gewicht auf und benötigt nur wenig Platz. Solche streifen- oder bandförmigen Zugelemente sind ferner einfach und rasch zu montieren und kostengünstig in der Beschaffung.

Ferner kann vorteilhafterweise vorgesehen sein, dass mindestens ein Zugelement sich um mindestens eine Stirnseite des Brennstoffzellenstapels herum erstreckt. Dadurch können die Spannkräfte von dem Zugelement großflächig und gleichmäßg verteilt über die betreffende Stirnseite des Brennstoffzellenstapels in die BrennstofFzelleneinheiten eingeleitet werden, wodurch eine bessere Kraftverteilung erreicht wird als mit Zugmitteln, die nur am Rand der Endplatten des Brennstoffzellenstapels angreifen.

Der erfindungsgemäße Brennstoffzellenstapel kann Hochtemperatur- Brennstoffzelleneinheiten (beispielsweise vom SOFC(Solid Oxide Fuel Cell)-Typ) oder auch Niedertemperatur- Brennstoffzelleneinheiten (beispielsweise vom PEM(Polymere Electrolyte Membrane)-Typ oder vom DMFC(Direct Methanol Fuel Cell)-Typ) umfassen.

Die erfindungsgemäße Spannvorrichtung dient vorzugsweise zum Aufbringen der erforderlichen Dicht- und Kontaktkräfte im Betrieb des Brennstoffzellenstapels, kann aber auch nur zur Transportsicherung dienen (im letzteren Falle kann die Spannvorrichtung vor der Inbetriebnahme des Brennstoffzellenstapels entfernt werden).

Bei einer bevorzugten Ausgestaltung der Erfindung ist vorgesehen, dass die Spannvorrichtung mindestens zwei Zugelemente umfasst, die sich um mindestens eine Stirnseite des Brennstoffzellenstapels herum erstrecken und in einer quer zur Stapelrichtung verlaufenden Richtung voneinander beabstandet sind.

Der Brennstoffzellenstapel kann mindestens ein Stapelendelement umfassen, das eine stirnseitige Begrenzung des Brennstoffzellenstapels bildet.

Ein solches Stapelendelement kann insbesondere als eine Endplatte ausgebildet sein.

Vorzugsweise erstreckt sich in diesem Falle mindestens ein Zugelement um mindestens ein Stapelendelement des Brennstoffzellenstapels herum.

Das sich um mindestens ein Stapelendelement des Brennstoffzellenstapels herum erstreckende Zugelement kann an einem anderen Stapelendelement des Brennstoffzellenstapels eingehängt sein.

Dabei ist es günstig, wenn mindestens ein Zugelement an mindestens einem Stapelendelement, insbesondere im wesentlichen flächig, anliegt, um eine gute Krafteinleitung von dem Zugelement in das Stapelendelement zu gewährleisten.

Das verwendete Zugelement ist vorzugsweise flexibel ausgebildet, so dass es sich an ein Stapelendelement beliebiger Gestalt anschmiegen kann.

Um das Zugelement unter Zugspannung zu setzen, ist das Zugelement an mindestens einem Stapelendelement festgelegt.

Bei einer Temperaturänderung können sich die Brennstoffzelleneinheiten einerseits und das Material des Zugelements andererseits aufgrund unterschiedlicher mittlerer Wärmeausdehnungskoeffizienten unterschiedlich stark längs der Stapelrichtung ausdehnen. Um solche Wärmeausdehnungsdifferenzen ausgleichen zu können, ist es von Vorteil, wenn die Spannvorrichtung mindestens ein federndes Längendehnungsausgleichselement umfasst.

Besonders günstig ist es, wenn das Längendehnungsausgleichselement in mindestens ein Zugelement integriert ist, da auf diese Weise die Anzahl der für den Aufbau des Brennstoffzellenstapels erforderlichen Bauelemente verringert wird.

Das Zugelement ist vorzugsweise einstückig mit dem Längendehnungsausgleichselement ausgebildet.

Insbesondere kann vorgesehen sein, dass mindestens ein Längendehnungsausgleichselement durch einen gewellten und/oder gefalteten Bereich mindestens eines Zugelements gebildet ist.

Alternativ oder ergänzend hierzu kann vorgesehen sein, dass mindestens ein Längendehnungsausgleichselement durch einen mit einer verformbaren Ausnehmung versehenen Bereich mindestens eines Zugelements gebildet ist.

Um den Kraftfluss zwischen den Brennstoffzelleneinheiten einerseits und dem Zugelement andererseits noch präziser steuern und vergleichmäßigen zu können, ist es von Vorteil, wenn der Brennstoffzellenstapel mindestens ein federndes Druckübertragungselement umfasst.

Ein solches Druckübertragungselement kann insbesondere zwischen einer Brennstoffzelleneinheit und einem Stapelendelement, das eine stirnseitige Begrenzung des Brennstoffzellenstapels bildet, angeordnet sein.

Um die Brennstoffzelleneinheiten bei einer deutlich über der Umgebungstemperatur liegenden Betriebstemperatur betreiben zu können, insbesondere bei Verwendung von Hochtemperatur-Brennstoffzelleneinheiten, beispielsweise vom SOFC(Solid Oxide Fuel Cell)-Typ, ist es von Vorteil, wenn der Brennstoffzellenstapel mindestens ein Wärmeisolationselement umfasst.

Ein solches Wärmeisolationselement kann insbesondere zwischen den Brennstoffzelleneinheiten und mindestens einem Zugelement angeordnet sein. In diesem Fall ist es nicht erforderlich, dass das Zugelement bei der Betriebstemperatur der Brennstoffzelleneinheiten mechanisch und chemisch beständig ist.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Vorderansicht eines Brennstoffzellenstapels mit zwei Endplatten und zwei um eine der Endplatten herum geführten Spannbändern, die an der zweiten Endplatte eingehängt sind;

- Fig. 2: eine schematische Seitenansicht des Brennstoffzellenstapels aus Fig. 1, mit der Blickrichtung in Richtung des Pfeiles 2 in Fig. 1;
- Fig. 3: einen schematischen vertikalen Schnitt durch einen Randbereich der unteren Endplatte des Brennstoffzellenstapels und ein daran eingehängtes Spannband;
- Fig. 4: eine vergrößerte Darstellung des Bereichs I aus Fig. 2;
- Fig. 5: eine schematische Vorderansicht einer zweiten Ausführungsform eines Brennstoffzellenstapels, der zwischen der obersten Brennstoffzelleneinheit und der oberen Endplatte angeordnete federnde Druckübertragungselemente umfasst;
- Fig. 6: eine schematische Vorderansicht einer dritten Ausführungsform eines Brennstoffzellenstapels, der die Brennstoffzelleneinheiten umgebende Wärmeisolationselemente umfasst;
- Fig. 7: eine schematische Vorderansicht einer vierten Ausführungsform eines Brennstoffzellenstapels, welcher vier jeweils an beiden Endplatten eingehängte Spannbänder umfasst; und
- Fig. 8: eine schematische Seitenansicht des Brennstoffzellenstapels aus Fig. 7, mit der Blickrichtung in Richtung des Pfeiles 8 in Fig. 7.

Gleiche oder funktional äquivalente Elemente sind in allen Figuren mit denselben Bezugszeichen bezeichnet.

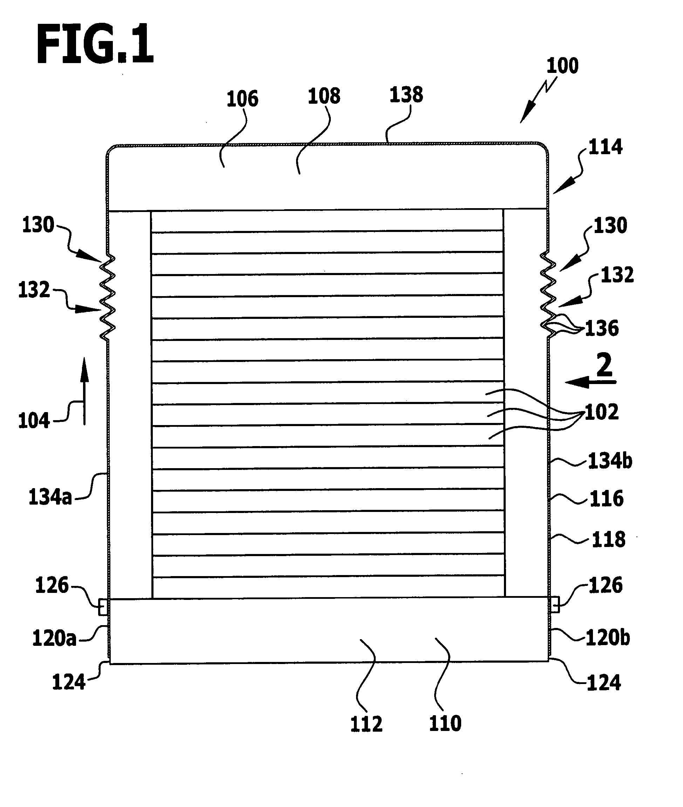

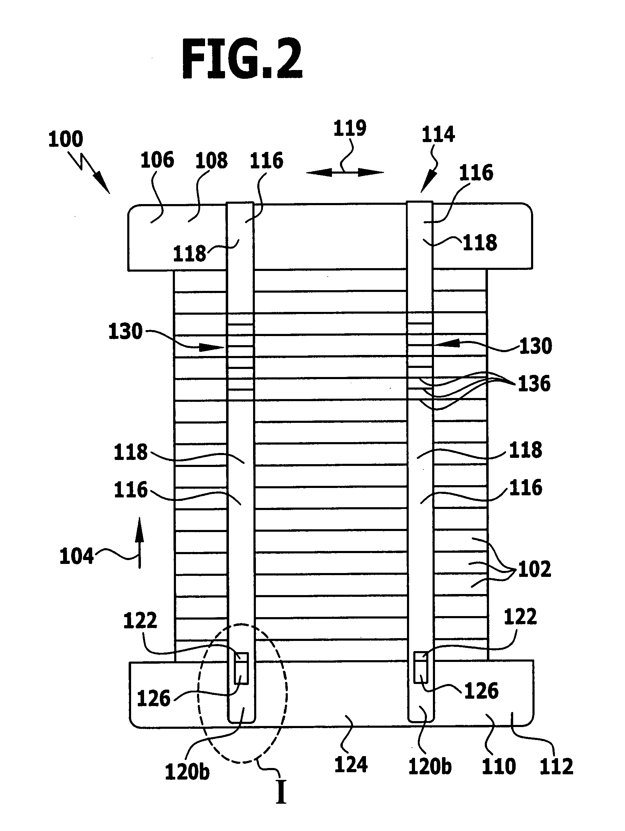

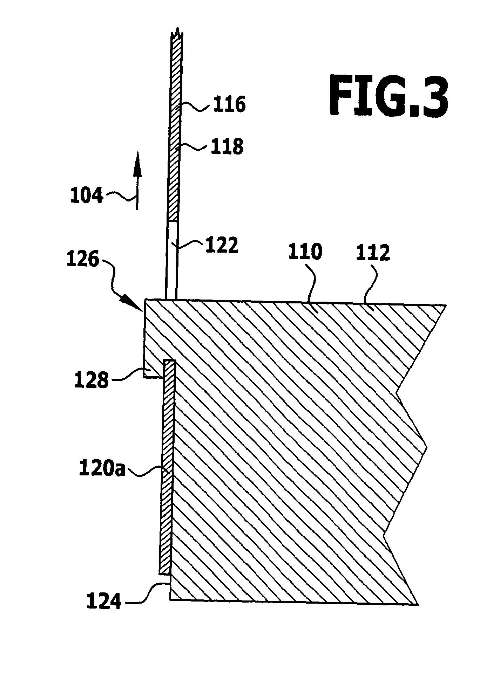

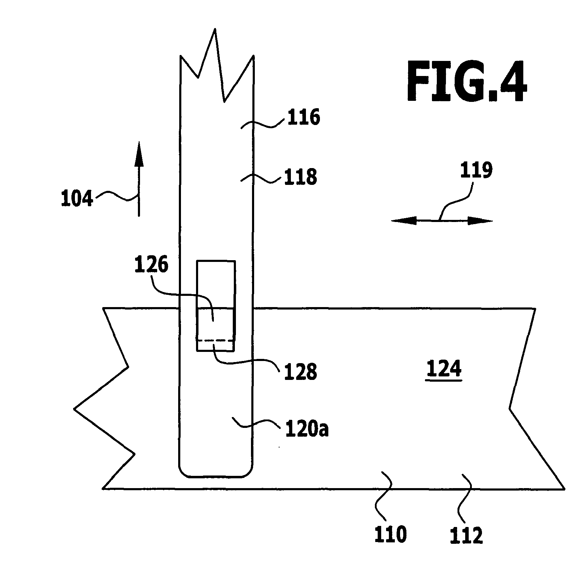

Ein in den Fig. 1 bis 4 dargestellter, als Ganzes mit 100 bezeichneter Brennstoffzellenstapel umfasst eine Vielzahl von planaren BrennstofFzelleneinheiten 102, die längs einer Stapelrichtung 104 aufeinandergestapelt sind.

Jede der Brennstoffzelleneinheiten 102 umfasst ein (nicht im Detail dargestelltes) Gehäuse, das beispielsweise aus einem als Gehäuseoberteil ausgebildeten ersten Blechformteil und einem als Gehäuseunterteil ausgebildeten zweiten Blechformteil zusammengesetzt sein kann, wie dies beispielsweise in der DE 100 44 703 A1 dargestellt und beschrieben ist.

Jede der Brennstoffzelleneinheiten 102 ist mit Durchtrittsöffnungen für Brenngas und mit Durchtrittsöffnungen für ein Oxidationsmittel versehen, wobei die Durchtrittsöffnungen längs der Stapelrichtung 104 aufeinanderfolgender Brennstoffzelleneinheiten 102 so miteinander fluchten, dass den Brennstoffzellenstapel 100 durchsetzende Zuführkanäle für Brenngas und für Oxidationsmittel sowie Abführkanäle für überschüssiges Brenngas und überschüssiges Oxidationsmittel ausgebildet sind.

An dem Gehäuse jeder Brennstoffzelleneinheit 102 ist ein Substrat mit einer daran angeordneten Kathoden-Elektrolyt-Anoden-Einheit (KEA-Einheit) gehalten, wobei in der KEA-Einheit die elektrochemische Brennstoffzellenreaktion abläuft.

Die KEA-Einheiten einander benachbarter Brennstoffzelleneinheiten 102 sind über elektrisch leitende Kontaktelemente miteinander verbunden.

Die Gehäuse aufeinanderfolgender Brennstoffzelleneinheiten 102 sind mittels elektrisch isolierender, gasdichter Dichtungselemente miteinander verbunden.

Die obere Stirnseite des Brennstoffzellenstapels 100 wird durch ein erstes Stapelendelement 106 in Form einer oberen Endplatte 108 begrenzt.

Die untere Stirnfläche des Brennstoffzellenstapels 100 wird durch ein zweites Stapelendelement 110 in Form einer unteren Endplatte 112 begrenzt.

Die Endplatten 108, 112 weisen einen größeren horizontalen Querschnitt auf als die Brennstoffzelleneinheiten 102 und stehen seitlich über die aufeinandergestapelten Brennstoffzelleneinheiten 102 über.

Die Endplatten 108, 112 sind vorzugsweise aus einem bei der Betriebstemperatur der Brennstoffzelleneinheiten 102 chemisch und mechanisch beständigen metallischen Material gebildet und können mit den die Brennstoffzelleneinheiten 102 durchsetzenden Zuführkanälen und Abführkanälen für Brenngas und Oxidationsmittel in Verbindung stehende Gasdurchtrittskanäle aufweisen.

Um im Betrieb des Brennstoffzellenstapels 100 die erforderlichen Dichtkräfte auf die Dichtungselemente der Brennstoffzelleneinheiten 102 und die erforderlichen Kontaktkräfte auf die Kontaktelemente der Brennstoffzelleneinheiten 102 aufzubringen, umfasst der Brennstoffzellenstapel 100 ferner eine Spannvorrichtung 114, mittels welcher die Stapelendelemente 106, 110 und damit die dazwischen angeordneten Brennstoffzelleneinheiten 102 gegeneinander verspannt werden.

Bei der in den Fig. 1 bis 4 dargestellten Ausführungsform eines Brennstoffzellenstapels 100 umfasst diese Spannvorrichtung 114 mehrere, beispielsweise zwei, bandförmige Zugelemente 116 in Form von Spannbändern 118, welche sich um eines der Stapelendelemente 106, 110, beispielsweise um die obere Endplatte 108, herum erstrecken und mit ihren beiden Endbereichen 120a, 120b jeweils an dem anderen Stapelendelement, also beispielsweise an der unteren Endplatte 112, eingehängt sind.

Um dieses Einhängen zu ermöglichen, sind die Spannbänder 118 in ihren Endbereichen 120a, 120b mit jeweils einer, beispielsweise rechteckigen, Einhängeöffnung 122 versehen, während die untere Endplatte 112 an ihren Seitenwänden 124 mit mehreren Einhängenasen 126, welche einen nach unten vorstehenden Vorsprung 128 aufweisen, versehen ist.

Bei der Montage der Spannbänder 118 an dem Brennstoffzellenstapel 100 werden die Endbereiche 120a, 120b der Spannbänder soweit nach unten gezogen, dass die Vorsprünge 128 der Einhängenasen 126 der unteren Endplatte 112 durch die Einhängeöffnungen 122 der Spannbänder 118 hindurchbewegt werden können und die unteren Ränder der Einhängeöffnungen 122, nachdem sie durch die Eigenelastizität des jeweiligen Spannbandes 118 wieder nach oben gezogen worden sind, hinter den jeweils eine Hinterschneidung bildenden Vorsprüngen 128 zu liegen kommen und somit durch die Vorsprünge 128 gegen ein Ablösen von der unteren Endplatte 112 gesichert sind.

Die Verbindung zwischen einem Spannband 118 und der unteren Endplatte 112 kann in einfacher Weise dadurch gelöst werden, dass der Endbereich 120a, 120b des Spannbandes 118 nach unten gezogen wird, bis die jeweilige Einhängeöffnung 122 so mit der Einhängenase 126 fluchtet, dass der Rand der Einhängeöffnung 122 an der Einhängenase 126 vorbei von der Seitenwand 124 der unteren Endplatte 112 wegbewegt werden kann, um das Spannband 118 außer Eingriff mit der Einhängenase 126 zu bringen.

Die beiden Spannbänder 118 sind in einer senkrecht zur Stapelrichtung 104 verlaufenden horizontalen Querrichtung 119 voneinander beabstandet.

Die Spannbänder 118 sind vorzugsweise aus einem metallischen Material, insbesondere aus einem Stahlblechmaterial, gebildet.

Alternativ hierzu können auch andere Materialien mit einer ausreichend hohen Zugfestigkeit und thermischen Beständigkeit verwendet werden, beispielsweise geeignete Kunststoffmaterialien.

Wenn der Brennstoffzellenstapel 100 seine Temperatur ändert, insbesondere auf Betriebstemperatur gebracht wird, können sich die Brennstoffzelleneinheiten 102 mit den Stapelendelementen 106 und 110 einerseits und die Zugelemente 116 andererseits aufgrund unterschiedlicher mittlerer Wärmeausdehnungskoeffizienten unterschiedlich stark längs der Stapelrichtung 104 ausdehnen. Um solche unterschiedlichen Längenausdehnungen kompensieren und dennoch eine ausreichend hohe Kontaktkraft bzw. Dichtkraft zwischen den Brennstoffzelleneinheiten 102 mittels der Spannvorrichtung 114 erzeugen zu können, weist jedes der Zugelemente 116 jeweils zwei federnde Längendehnungsausgleichselemente 130 auf, die in Form von ziehharmonikaartig gefalteten oder gewellten Bereichen 132 in die beiden parallel zur Stapelrichtung 104 verlaufenden Abschnitte 134a, 134b des jeweiligen Spannbandes 118 integriert sind.

Wenn sich die Brennstoffzelleneinheiten 102 längs der Stapelrichtung 104 stärker ausdehnen als das Material der Spannbänder 118, so vergrößert sich die Ausdehnung der gefalteten oder gewellten Bereiche 132 längs der Stapelrichtung 104 um einen der Längenausdehnungsdifferenz entsprechenden Betrag, indem die Scheitellinien 136 des gefalteten oder gewellten Bereichs 132 weiter auseinanderrücken.

Umgekehrt wird eine Verkürzung des gefalteten oder gewellten Bereichs 132 längs der Stapelrichtung 104 erzielt, indem die Scheitellinien 136 des gefalteten oder gewellten Bereichs 132 näher zusammenrücken.

Somit kann durch eine reversible Längenänderung der Längenausgleichselemente 130 ein Unterschied in der Wärmedehnung der Brennstoffzelleneinheiten 102 einerseits und des Materials der Zugelemente 116 andererseits ausgeglichen, eine Überdehnung der Zugelemente 116 vermieden und eine auf die Brennstoffzelleneinheiten 102 einwirkende gewünschte Spannkraft aufrechterhalten werden.

Der zwischen den parallel zur Stapelrichtung 104 verlaufenden Abschnitten 134a, 134b, welche flächig an den Seitenwänden 124 der oberen Endplatte 108 anliegen, angeordnete Abschnitt 138 jedes Spannbandes 118 liegt flächig an der Oberseite der oberen Endplatte 108 an, so dass die Zugkraft der Zugelemente 116 über eine große Fläche hinweg und gleichmäßig verteilt auf die obere Endplatte 108 einwirken kann, wodurch ein gleichmäßiger Kraftfluss durch die obere Endplatte 108 hindurch auf die Brennstoffzelleneinheiten 102 gewährleistet ist.

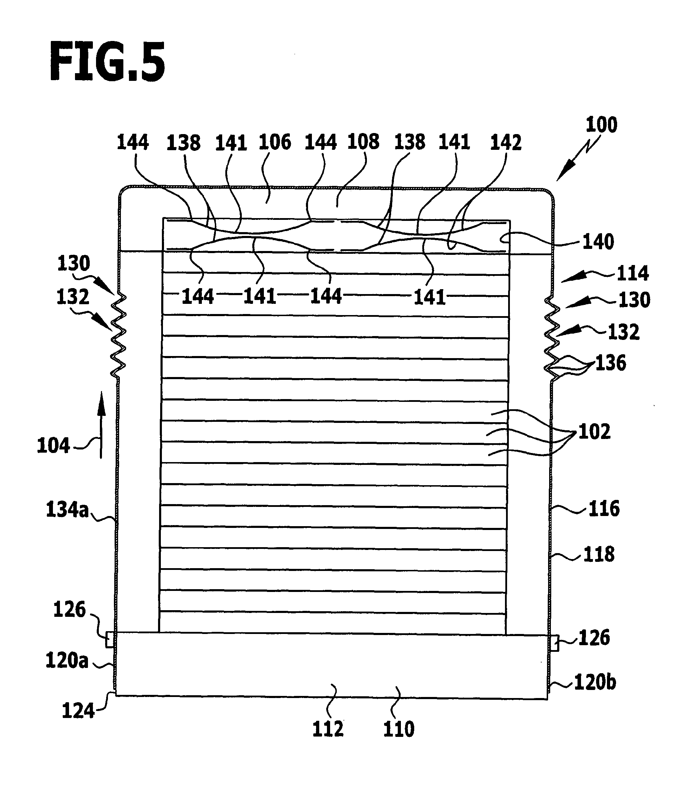

Eine in Fig. 5 dargestellte zweite Ausführungsform eines Brennstoffzellenstapels 100 unterscheidet sich von der vorstehend beschriebenen ersten Ausführungsform dadurch, dass das erste Stapelendelement 106, das heißt die obere Endplatte 108, nicht direkt an der obersten Brennstoffzelleneinheit 102 anliegt, sondern indirekt über mehrere federnde Druckübertragungselemente 138, welche zwischen dem ersten Stapelendelement 106 und der obersten Brennstoffzelleneinheit 102 angeordnet sind.

Zur Aufnahme dieser Druckübertragungselemente 138 ist die obere Endplatte 108 des Brennstoffzellenstapels 100 an ihrer Unterseite mit einer im wesentlichen quaderförmigen Ausnehmung 140 versehen.

Die federnden Druckübertragungselemente 138 können insbesondere als Blechplatten ausgebildet sein, die jeweils mit einer Vollsicke 141 versehen sind und paarweise so aufeinander angeordnet sind, dass die Sickenkuppen 142 der Vollsicken 141 einander zugewandt sind und die Sickenfüße 144 sich an der oberen Endplatte 108 bzw. an der obersten Brennstoffzelleneinheit 102 abstützen.

Durch Verwendung solcher zusätzlichen federnden Druckübertragungselemente 138 kann der Kraftfluss zwischen den Brennstoffzelleneinheiten 102 einerseits und den Zugelementen 116 und dem Stapelendelement 106 andererseits noch präziser gesteuert und vergleichmäßigt werden.

Im übrigen stimmt die in Fig. 5 dargestellte zweite Ausführungsform eines Brennstoffzellenstapels 100 hinsichtlich Aufbau und Funktion mit der in den Fig. 1 bis 4 dargestellten ersten Ausführungsform überein, auf deren vorstehende Beschreibung insoweit Bezug genommen wird.

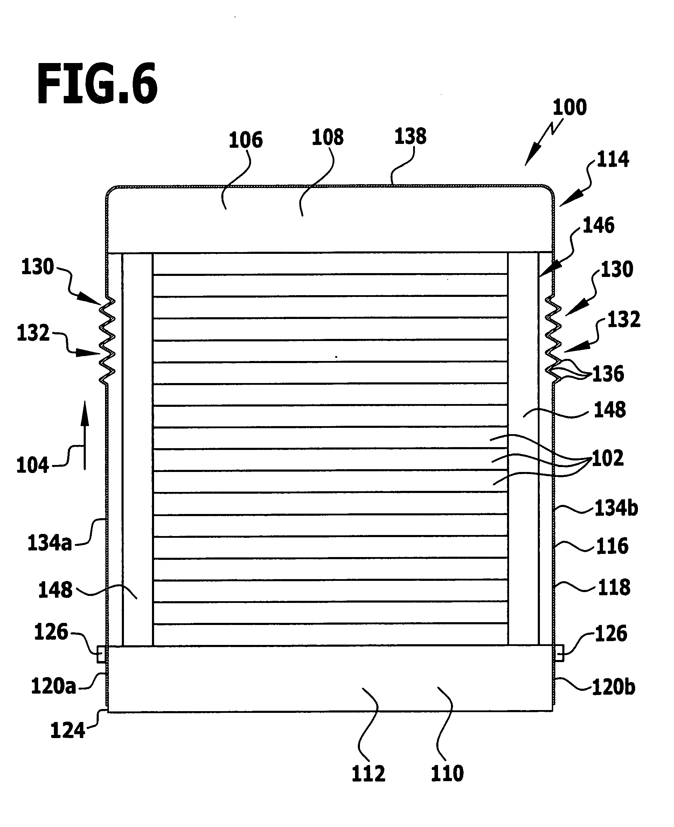

Eine in Fig. 6 dargestellte dritte Ausführungsform eines Brennstoffzellenstapels 100 unterscheidet sich von der in den Fig. 1 bis 4 dargestellten ersten Ausführungsform dadurch, dass zwischen den Brennstoffzelleneinheiten 102 und der Spannvorrichtung 114 eine Wärmeisolation 146 angeordnet ist, welche aus wärmeisolierendem Material gebildete oder wärmeisolierende Einsätze umfassende Endplatten 108, 112 sowie die Brennstoffzelleneinheiten 102 seitlich abdeckende Wärmeisolationselemente 148 umfasst.

Die Wärmeisolation 146 ist dazu in der Lage, Kräfte von den Zugelementen 116 auf die Brennstoffzelleneinheiten 102 zu übertragen.

Ferner ermöglicht es die Wärmeisolation 146, die Brennstoffzelleneinheiten 102 bei einer deutlich über der Umgebungstemperatur liegenden Betriebstemperatur zu betreiben.

Die in Fig. 6 dargestellte dritte Ausführungsform eines Brennstoffzellenstapels 100 eignet sich daher insbesondere zur Verwendung mit Hochtemperatur-Brennstoffzelleneinheiten, die eine Betriebstemperatur im Bereich von ungefähr 800°C bis ungefähr 950°C aufweisen.

Solche Hochtemperatur-Brennstoffzelleneinheiten können insbesondere vom SOFC(Solid Oxide Fuel Cell)-Typ sein.

Im übrigen stimmt die in Fig. 6 dargestellte dritte Ausführungsform eines Brennstoffzellenstapels 100 hinsichtlich Aufbau und Funktion mit der in den Fig. 1 bis 4 dargestellten ersten Ausführungsform überein, auf deren vorstehende Beschreibung insoweit Bezug genommen wird.

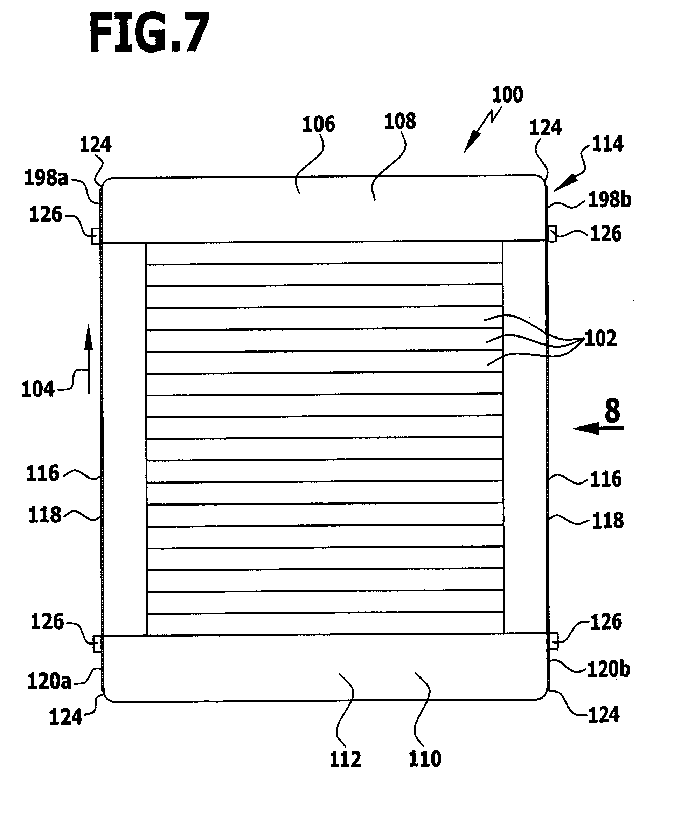

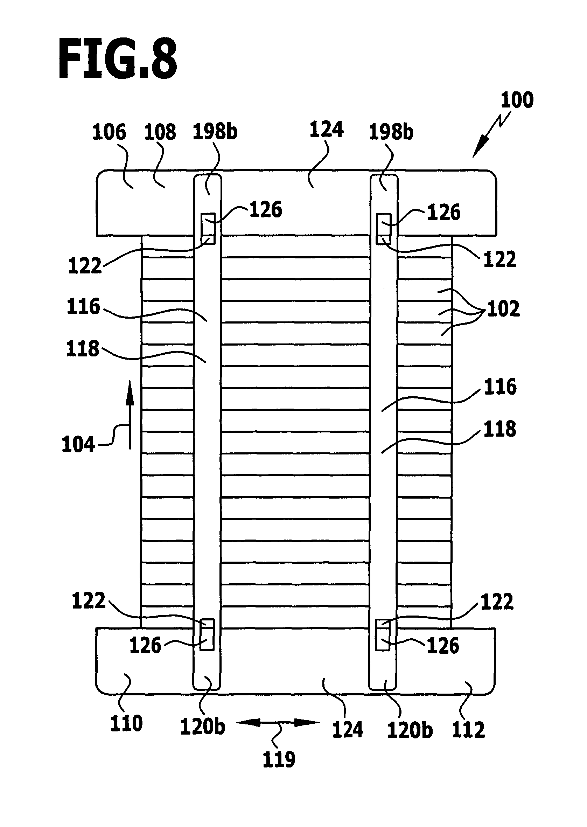

Eine in den Fig. 7 und 8 dargestellte vierte Ausführungsform eines Brennstoffzellenstapels 100 unterscheidet sich von der in den Fig. 1 bis 4 dargestellten ersten Ausführungsform dadurch, dass statt zweier bandförmiger Zugelemente 116, welche sich um die obere Endplatte 108 herum erstrecken, insgesamt vier bandförmige Zugelemente 116 in Form von Spannbändern 118 vorhanden sind, welche jeweils sowohl an der unteren Endplatte 112 als auch an der oberen Endplatte 108 eingehängt sind.

Um dieses zu ermöglichen, weist auch die obere Endplatte 108 an ihren Seitenwänden 124 Einhängenasen 126 auf, welche spiegelsymmetrisch zu den Einhängenasen 126 an der unteren Endplatte 112 ausgebildet und angeordnet sind.

Ferner sind die vier Spannbänder 118 an ihren oberen Endbereichen 198a bzw. 198b mit jeweils einer, beispielsweise rechteckigen, Einhängeöffnung 122 versehen.

Das Einhängen der Spannbänder 118 an den Einhängenasen 126 der oberen Endplatte 108 sowie das Lösen der Spannbänder 118 von den Einhängenasen 126 erfolgt in genau derselben Weise, wie dies vorstehend im Zusammenhang mit dem ersten Ausführungsbeispiel für das Einhängen an den Einhängenasen 126 der unteren Endplatte 112 bzw. für das Lösen der Spannbänder 118 von der unteren Endplatte 112 beschrieben worden ist.

Im übrigen stimmt die in den Fig. 7 und 8 dargestellte vierte Ausführungsform eines Brennstoffzellenstapels 100 hinsichtlich Aufbau und Funktion mit der in den Fig. 1 bis 4 dargestellten ersten Ausführungsform überein, auf deren vorstehende Beschreibung insoweit Bezug genommen wird.

## Patentansprüche

1. Brennstoffzellenstapel, umfassend mehrere längs einer Stapelrichtung (104) aufeinanderfolgende Brennstoffzelleneinheiten (102), mindestens eine Spannvorrichtung (114), mittels welcher die Brennstoffzelleneinheiten (102) gegeneinander verspannt werden, und mindestens ein Stapelendelement (106, 110), das eine stirnseitige Begrenzung des Brennstoffzellenstapels (100) bildet,
**dadurch gekennzeichnet, dass**
die Spannvorrichtung (114) mindestens ein Zugelement (116) umfasst, das eine Zugkraft für die Verspannung der Brennstoffzelleneinheiten (102) überträgt und an mindestens einem Stapelendelement (106, 110) eingehängt ist.

2. Brennstoffzellenstapel nach Anspruch 1, **dadurch gekennzeichnet, dass** mindestens ein Stapelendelement (106, 110) mindestens eine Einhängenase (126) zum Einhängen des mindestens einen Zugelements (116) aufweist.

3. Brennstoffzellenstapel nach Anspruch 2, **dadurch gekennzeichnet, dass** die Einhängenase (126) einen eine Hinterschneidung bildenden Vorsprung (128) aufweist, durch den das Zugelement (116) gegen ein Ablösen von dem Stapelendelement (106, 110) gesichert ist.

4. Brennstoffzellenstapel nach einem der Ansprüche 1 bis 3, **dadurch gekennzeichnet, dass** mindestens ein Zugelement (116) mindestens eine Einhängeöffnung (122) zum Einhängen an mindestens einem Stapelendelement (106, 110) aufweist.

5. Brennstoffzellenstapel nach einem der Ansprüche 1 bis 4, **dadurch gekennzeichnet, dass** der Brennstoffzellenstapel (100) zwei einander gegenüberliegende Stapelendelemente (106, 110) umfasst, welche jeweils eine stirnseitige Begrenzung des Brennstoffzellenstapels (100) bilden, und dass mindestens ein Zugelement (116) an beiden Stapelendelementen (106, 110) eingehängt ist.

6. Brennstoffzellenstapel nach einem der Ansprüche 1 bis 5, **dadurch gekennzeichnet, dass** mindestens ein Zugelement (116) streifen- oder bandförmig ausgebildet ist.

7. Brennstoffzellenstapel nach einem der Ansprüche 1 bis 6, **dadurch gekennzeichnet, dass** mindestens ein Zugelement (116) sich um mindestens eine Stirnseite des Brennstoffzellenstapels (100) herum erstreckt.

8. Brennstoffzellenstapel nach einem der Ansprüche 1 bis 7, **dadurch gekennzeichnet, dass** die Spannvorrichtung (114) mindestens zwei Zugelemente (116) umfasst, die sich um mindestens eine Stirnseite des Brennstoffzellenstapels (100) herum erstrecken und in einer quer zur Stapelrichtung (104) verlaufenden Richtung (119) voneinander beabstandet sind.

9. Brennstoffzellenstapel nach einem der Ansprüche 1 bis 8, **dadurch gekennzeichnet, dass** mindestens ein Stapelendelement (106, 110) als eine Endplatte (108, 112) ausgebildet ist.

10. Brennstoffzellenstapel nach einem der Ansprüche 1 bis 9, **dadurch gekennzeichnet, dass** sich mindestens ein Zugelement (116) um mindestens ein Stapelendelement (106, 110) des Brennstoffzellenstapels (100) herum erstreckt.

11. Brennstoffzellenstapel nach Anspruch 10, **dadurch gekennzeichnet, dass** das sich um mindestens ein Stapelendelement (106) des Brennstoffzellenstapels (100) herum erstreckende Zugelement (116) an einem anderen Stapelendelement (110) des Brennstoffzellenstapels (100) eingehängt ist.

12. Brennstoffzellenstapel nach einem der Ansprüche 10 oder 11, **dadurch gekennzeichnet, dass** mindestens ein Zugelement (116) an mindestens einem Stapelendelement (106, 110) anliegt.

13. Brennstoffzellenstapel nach Anspruch 12, **dadurch gekennzeichnet, dass** mindestens ein Zugelement (116) im wesentlichen flächig an mindestens einem Stapelendelement (106, 110) anliegt.

14. Brennstoffzellenstapel nach einem der Ansprüche 1 bis 13, **dadurch gekennzeichnet, dass** die Spannvorrichtung (114) mindestens ein federndes Längendehnungsausgleichselement (130) umfasst.

15. Brennstoffzellenstapel nach Anspruch 14, **dadurch gekennzeichnet, dass** mindestens ein Längendehnungsausgleichselement (130) in mindestens ein Zugelement (116) integriert ist.

16. Brennstoffzellenstapel nach Anspruch 15, **dadurch gekennzeichnet, dass** mindestens ein Längendehnungsausgleichselement (130) durch einen gewellten und/oder gefalteten Bereich mindestens eines Zugelements (116) gebildet ist.

17. Brennstoffzellenstapel nach einem der Ansprüche 15 oder 16, **dadurch gekennzeichnet, dass** mindestens ein Längendehnungsausgleichselement (130) durch einen mit einer verformbaren Ausnehmung versehenen Bereich mindestens eines Zugelements (116) gebildet ist.

18. Brennstoffzellenstapel nach einem der Ansprüche 1 bis 17, **dadurch gekennzeichnet, dass** der Brennstoffzellenstapel (100) mindestens ein federndes Druckübertragungselement (138) umfasst.

19. Brennstoffzellenstapel nach Anspruch 18, **dadurch gekennzeichnet, dass** mindestens ein Druckübertragungselement (138) zwischen einer Brennstoffzelleneinheit (102) und einem Stapelendelement (106), das eine stirnseitige Begrenzung des Brennstoffzellenstapels (100) bildet, angeordnet ist.

20. Brennstoffzellenstapel nach einem der Ansprüche 1 bis 19, **dadurch gekennzeichnet, dass** der Brennstoffizellenstapel (100) mindestens ein Wärmeisolationselement (148) umfasst.

21. Brennstoffzellenstapel nach Anspruch 20, **dadurch gekennzeichnet, dass** mindestens ein Wärmeisolationselement (148) zwischen den Brennstoffzelleneinheiten (102) und mindestens einem Zugelement (116) angeordnet ist.
